# EUROPÄISCHE PATENTSCHRIFT

(11) **EP 3 507 116 B1**
(45) Veröffentlichungstag und Bekanntmachung des Hinweises auf die Patenterteilung: **22.07.2020**
(21) Anmeldenummer: 17771676.8
(22) Anmeldetag: 30.08.2017
(51) Int. Cl.: B60H 1/00, A62C 3/07, F24F 11/00

(54) **KOMBINIERTES KÜHL- UND LÖSCHSYSTEM**
COMBINED COOLING AND EXTINGUISHING SYSTEM
SYSTÈME COMBINÉ DE REFROIDISSEMENT ET D'EXTINCTION

(30) Priorität: 02.09.2016 DE 102016216619
(43) Veröffentlichungstag der Anmeldung: 10.07.2019
(73) Patentinhaber: Vitesco Technologies GmbH, 30165 Hannover (DE)
(72) Erfinder: BAUMGÄRTNER, Christoph, 93128 Regenstauf (DE); FOKKELMAN, Joris, 93105 Tegernheim (DE)
(74) Vertreter: Waldmann, Georg Alexander
(86) Internationale Anmeldenummer: PCT/EP2017/071763
(87) Internationale Veröffentlichungsnummer: WO 2018/041895

(56) Entgegenhaltungen:
- EP-A1- 0 675 013
- DE-A1- 3 701 086
- DE-A1-102014 223 956
- DE-T2- 69 525 767
- US-A1- 2005 115 253

## Beschreibung

Die Erfindung betrifft ein kombiniertes Kühl- und Löschsystem für ein Kraftfahrzeug. Weiterhin wird ein Kraftfahrzeug mit dem kombinierten Kühl- und Löschsystem beansprucht.

Kühlsysteme bzw. Klimaanlagen für Kraftfahrzeuge umfassen typischerweise einen Kompressor, ein Expansionsventil, einen Verdampfer und einen Kondensator. Innerhalb der Klimaanlage zirkuliert ein Kühlmittel, bei welchem es sich insbesondere um Kohlenstoffdioxid (CO₂) handeln kann. CO₂ wird auch als Kältemittel R744 bezeichnet. Innerhalb der Klimaanlage kann das CO₂ durch den Kompressor verdichtet werden. Der Kompressor wird dabei typischerweise über einen Riementrieb angetrieben, welcher wiederum von einem Verbrennungskraftmotor des Kraftfahrzeugs angetrieben wird. Bei bekannten Kraftfahrzeugen, insbesondere bei Hybridfahrzeugen, ist eine Motor-Stopp-Funktion vorgesehen, um den Kraftstoffverbrauch des Kraftfahrzeugs zu senken.

Allerdings ist zumeist der Kompressor der Klimaanlage wie vorstehend beschrieben an den Riementrieb gekoppelt, sodass zum Betrieb der Klimaanlage der Verbrennungskraftmotor laufen muss. Zwar ist innerhalb der Klimaanlage stets eine gewisse Latenzkälte vorhanden, insbesondere in einer Masse eines Wärmetauschers bzw. Verdampfers der Klimaanlage und des Kältemittels. Diese Latenzkälte ist jedoch in der Regel nach einigen Sekunden bereits verbraucht und steht nicht länger zur Kühlung insbesondere eines Innenraums des Kraftfahrzeugs zur Verfügung.

Um eine weitere Kühlung des Innenraums und somit einen Fahrkomfort von Insassen des Kraftfahrzeugs weiter zu ermöglichen, wird in der Regel der Verbrennungskraftmotor erneut gestartet, was eine Einsparung von Kraftstoff erschwert.

Weiterhin sind Löschsysteme für Kraftfahrzeuge bekannt, welche CO₂ als Löschmittel umfassen. CO₂ ist insbesondere geeignet Schmorbrände von Elektronikbauteilen, Flüssigkeitsbrände von Rohölderivaten und Feststoffbrände ausgelöst durch Rohölderivate zu löschen.

Aus der DE 695 25 767 T2 ist ein System zum automatischen Erfassen von Brandgefahren und zum Verhindern/Löschen von Bränden, insbesondere für Fahrzeuge, die mit einem Verbrennungsmotor ausgestattet sind, bekannt.

Die DE 10 2014 223956 A1 zeigt ein Kühl- und Löschsystem mit einem Steuerventil zwischen der Niederdruckseite des Kältemittelkreislaufs und dem Druckbehälter des CO₂ Löschsystems.

Die EP 0 675 013 A1 offenbart ein System, bei welchem in einfacher Weise bauraumsparend das Kreislaufmedium der Klimaanlage als Feuerlöschmittel bzw. die Klimaanlage als Feuerlöschspender bei Bedarf gezielt genutzt wird, wobei ein gesonderter Löschmittelspeicher entfällt.

Aus der US 2005/115253 A1 ist ein System bekannt, wobei Kohlendioxidkältemittel durch ein Dampfkompressionssystem, das einen Kompressor, einen Gaskühler, eine Expansionsvorrichtung und einen Verdampfer enthält, zirkuliert wird. Kohlendioxid wird aus einem Fahrzeugabgasstrom extrahiert, der Verbrennungsprodukte von verbranntem Kohlenwasserstoffkraftstoff enthält. Das extrahierte Kohlendioxid wird verwendet, um die anfängliche Zufuhr von Kohlendioxid-Kältemittel zu ergänzen, um einen gewünschten (oder vorbestimmten) Kältemittelstand in dem System aufrechtzuerhalten.

Die DE 3701086A1 zeigt einen Kältemittelkreislauf mit einem federbelasteten Druckbehälter.

Die Aufgabe der vorliegenden Erfindung kann darin gesehen werden, ein Kühlsystem der eingangs genannter Art bereitzustellen, welches eine längere Kühlung eines Innenraums eines Kraftfahrzeugs ermöglicht, wenn das Kühlsystem nicht durch einen Verbrennungskraftmotor des Kraftfahrzeugs angetrieben wird.

Die Aufgabe wird gelöst durch die Gegenstände der unabhängigen Patentansprüche. Vorteilhafte Ausführungsformen sind Gegenstand der Unteransprüche, der nachfolgenden Beschreibung sowie der Figuren.

Gemäß einem ersten Aspekt der Erfindung wird ein kombiniertes Kühl- und Löschsystem bereitgestellt. Das kombinierte Kühl- und Löschsystem kann insbesondere in einem Kraftfahrzeug eingesetzt werden. Das kombinierte Kühl- und Löschsystem umfasst ein Kühlsystem, innerhalb welchem Kohlenstoffdioxid (CO₂) als Kühlmittel zirkuliert, wobei das Kühlsystem einen Kompressor, einen Verdampfer, ein Expansionsventil und einen Kondensator aufweist.

Das CO₂ kann durch den Kompressor unter Verbrauch von Antriebsenergie, welche insbesondere durch einen Verbrennungskraftmotor des Kraftfahrzeugs bereitgestellt werden kann, verdichtet werden. In dem Kondensator kann das CO₂ kondensieren, wobei es Wärme bei hoher Temperatur insbesondere an eine äußere Umgebung des Kraftfahrzeugs abgeben kann, entsprechend einer bei dem hohen Druck ebenfalls hohen Kondensationstemperatur. Das verflüssigte CO₂ kann anschließend zu dem Expansionsventil geleitet werden, wo es entspannt wird. Innerhalb des Verdampfers dann das CO₂ anschließend durch Verdampfen Wärme bei niedriger Temperatur aufnehmen, insbesondere Wärme eines Innenraums des Kraftfahrzeugs. Der Kompressor saugt von dem Verdampfer verdampftes CO₂ wieder an, wodurch der Kreisprozess geschlossen ist.

Das kombinierte Kühl- und Löschsystem umfasst weiterhin ein Löschsystem mit einem Druckbehälter, innerhalb welchem verdichtetes CO₂ gespeichert ist. Das CO₂ dient dem Löschsystem als Löschmittel, um ein Feuer, insbesondere im Bereich eines Motorraums des Kraftfahrzeugs zu bekämpfen.

Ferner umfasst das kombinierte Kühl- und Löschsystem ein Steuerungsventil, welches mit dem Druckbehälter des Löschsystems und mit dem Kühlsystem verbunden ist, und dazu eingerichtet ist, CO₂ aus dem Druckbehälter dem Kühlsystem zuzuführen und CO₂ des Kühlsystems dem Druckbehälter zuzuführen. Insbesondere kann dabei CO₂ aus dem Druckbehälter einem Bereich vor dem Expansionsventil oder vor dem Kompressor zugeführt oder den genannten Bereichen zur Abgabe in den Druckbehälter entnommen werden.

Durch das Zuführen von CO₂ aus dem Druckbehälter in das Kühlsystem kann die Kapazität des Kühlsystems, insbesondere die Wärmekapazität des Kühlmittels innerhalb des Kühlsystems, erhöht werden, um auf diese Weise auch in längeren Motor-Stopp-Phasen eine Kühlung des Innenraums des Fahrzeugs gewährleisten zu können. Weiterhin kann durch das Zuführen von CO₂ aus dem Druckbehälter eine mögliche Leckage des Kühlsystems ausgeglichen werden. Ferner beeinträchtigt die Möglichkeit des Zuführens von CO₂ aus dem Druckbehälter in das Kühlsystem nicht die Löschfunktion des Löschsystems, da CO₂ aus dem Kühlsystem in umgekehrter Richtung auch wieder dem Druckbehälter des Löschsystems zugeführt werden kann.

Insgesamt kann ferner die Menge von CO₂ in dem kombinierten Kühl- und Löschsystem erhöht werden, um eine Löschfunktion effektiver zu gestalten. Zudem kann durch die erhöhte Menge an CO₂ im System eine Leckage ausgeglichen werden. Eine Führungsgröße, um eine dazu notwendige Menge CO₂ zu bestimmen, muss dann nicht nur von der notwendigen Menge abhängen, welche zum Betrieb des Kühlsystems notwendig ist, sondern auch von einer Menge CO₂, welche man braucht, um insbesondere einen Motorraum des Kraftfahrzeugs für eine bestimmte Zeit mit CO₂ fluten zu können, um ein Feuer zu bekämpfen.

Gemäß einer Ausführungsform ist vorgesehen, dass das Steuerungsventil dazu eingerichtet ist, sich in eine in Richtung des Kühlsystems geöffnete Stellung zu begeben, wenn der Kompressor des Kühlsystems nicht angetrieben wird, insbesondere wenn der Kompressor nicht durch einen Verbrennungskraftmotor eines Kraftfahrzeugs angetrieben wird. In der geöffneten Stellung ist das Steuerungsventil in Richtung des Druckbehälters geschlossen und in Richtung des Kühlsystems geöffnet, sodass verdichtetes bzw. unter Druck stehendes CO₂ aus dem Druckbehälter in das Kühlsystem strömen kann, umgekehrt jedoch kein CO₂ aus dem Kühlsystem in den Druckbehälter strömen kann. Auf diese Weise kann eine CO₂-Masse innerhalb des Kühlsystems erhöht werden. Dadurch wird die Kapazität des Kühlsystems erhöht und eine besonders langanhaltende Kühlung des Innenraums des Kraftfahrzeugs ermöglicht.

Gemäß einer weiteren Ausführungsform ist vorgesehen, dass das Steuerungsventil dazu eingerichtet ist, sich in eine geschlossene Stellung zu begeben, sofern der Kompressor angetrieben wird, insbesondere mittels eines Verbrennungskraftmotors eines Kraftfahrzeugs. In der geschlossenen Stellung ist das Steuerungsventil in Richtung des Druckbehälters geschlossen und in Richtung des Kühlsystems geschlossen, sodass weder CO₂ aus dem Druckbehälter in das Kühlsystem strömen kann, noch CO₂ aus dem Kühlsystem in den Druckbehälter strömen kann. Mit anderen Worten ist der Druckbehälter in einer beidseitig geschlossenen Stellung des Steuerungsventils von dem Kühlsystem abgekoppelt. Diese beidseitig geschlossene Stellung des Steuerungsventil ist insbesondere dann vorteilhaft, wenn das Kühlsystem gestartet wird, indem dessen Kompressor angetrieben wird, insbesondere durch einen von einem Verbrennungskraftmotor des Kraftfahrzeugs angetriebenen Riementriebs. Durch die vorstehend beschriebene Abkopplung kann erreicht werden, dass eine optimale Menge CO₂ insbesondere zum Expansionsventil geleitet wird, wodurch eine besonders hohe thermische Leistung des Kühlsystems ermöglicht wird.

Gemäß einer weiteren Ausführungsform ist vorgesehen, dass das Steuerungsventil dazu eingerichtet ist, sich in eine geschlossene Stellung zu bewegen, sofern das Löschsystem CO₂ zur Bekämpfung eines Feuers abgibt. In dieser geschlossenen Stellung ist das Steuerungsventil insbesondere in Richtung des Kühlsystems geschlossen, sodass kein CO₂ aus dem Druckbehälter in das Kühlsystem strömen kann. In Richtung des Druckbehälters kann das Steuerungsventil jedoch geöffnet sein, sodass CO₂ aus dem Kühlsystem in den Druckbehälter strömen kann. Dadurch steht dem Löschsystem eine besonders große Menge CO₂ zur Bekämpfung eines Feuers zur Verfügung.

Gemäß einer weiteren Ausführungsform ist vorgesehen, dass das Steuerungsventil dazu eingerichtet ist, sich in eine in Richtung des Druckbehälters geöffnete Stellung zu bewegen, sofern sich das Kühlsystem in einem eingeschwungenem Zustand befindet. Unter einem "eingeschwungenem Zustand" kann in diesem Zusammenhang insbesondere verstanden werden, dass das Kühlsystem eine vorgesehene (Luft-)Temperatur insbesondere in einem Innenraum des Kraftfahrzeugs eingestellt bzw. ein geregelt hat. Das Steuerungsventil ist in Richtung des Druckbehälters geöffnet, sodass CO₂ aus dem Kühlsystem in den Druckbehälter strömen kann. In Richtung des Kühlsystems ist das Steuerungsventil jedoch geschlossen, sodass kein CO₂ aus dem Druckbehälter das Kühlsystem strömen kann. Auf diese Weise kann die Menge an CO₂ innerhalb des Druckbehälters vergrößert werden, sodass dem Löschsystem eine besonders große Menge CO₂ zur Bekämpfung eines eventuellen Feuers zur Verfügung steht. Weiterhin kann die erhöhte Menge an CO₂ innerhalb des Druckbehälters dazu genutzt werden, dem Kühlsystem erneut zugeführt zu werden, sofern dessen Kompressor nicht länger durch den Verbrennungsmotor angetrieben wird (siehe oben).

Gemäß einer weiteren Ausführungsform ist vorgesehen, dass das Steuerungsventil ein Solenoidventil (Magnetventil) ist. Derartige Ventile sind besonders gut geeignet, um die vorstehend erläuterten Funktionen des Steuerungsventils zu realisieren.

Gemäß einem zweiten Aspekt der Erfindung wird ein Fahrzeug, insbesondere ein Kraftfahrzeug, bereitgestellt. Das Fahrzeug umfasst ein vorstehend im Zusammenhang mit dem ersten Aspekt der Erfindung beschriebenes kombiniertes Kühl- und Löschsystem.

Gemäß einer Ausführungsform umfasst das Fahrzeug ferner einen Verbrennungskraftmotor und einen Riementrieb, wobei der Verbrennungskraftmotor dazu eingerichtet ist, den Riementrieb anzutreiben. Weiterhin ist der Kompressor des Kühlsystems derart mit dem Riementrieb gekoppelt, dass der Riementrieb den Kompressor antreiben kann. Bezüglich weiteren Effekten, Vorteilen und Ausführungsformen des erfindungsgemäßen Fahrzeugs wird zur Vermeidung von Wiederholungen auf die vorstehenden Ausführungen im Zusammenhang dem ersten Aspekt der Erfindung sowie auf die nachfolgende Figurenbeschreibung verwiesen.

Im Folgenden werden Ausführungsbeispiele der Erfindung anhand der schematischen und nicht maßstabsgetreuen Zeichnung näher erläutert. Hierbei zeigt:
- Fig.1: eine Seitenansicht eines Ausführungsbeispiels eines erfindungsgemäßen Kraftfahrzeugs mit einem Ausführungsbeispiel eines erfindungsgemäßen kombinierten Kühl- und Löschsystems,
- Fig. 2: ein Schema eines Ausführungsbeispiels eines erfindungsgemäßen kombinierten Kühl- und Löschsystems für das Kraftfahrzeug nach Fig. 1.

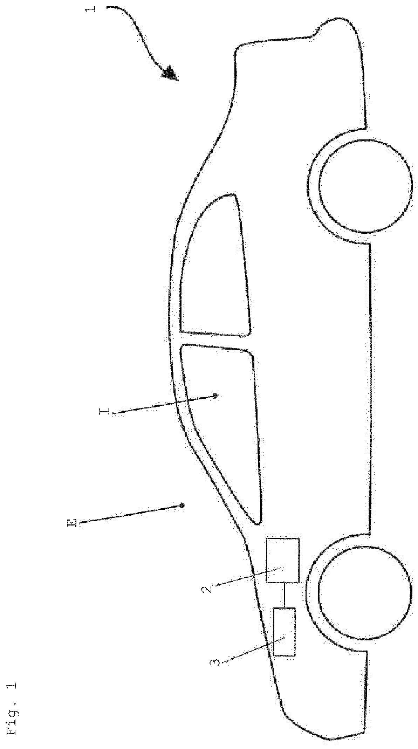

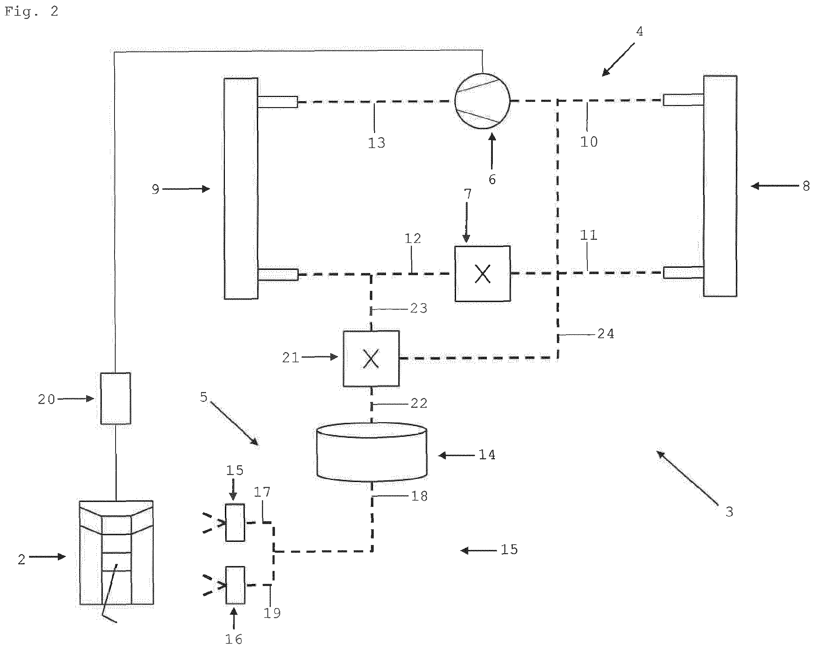

Fig. 1 zeigt ein Kraftfahrzeug 1, in dem gezeigten Ausführungsbeispiel ein Pkw, welches durch einen Verbrennungskraftmotor 2 angetrieben werden kann. Weiterhin umfasst das Kraftfahrzeug 1 ein kombiniertes Kühl- und Löschsystem 3, welches einen Kompressor (Fig. 2) aufweist, welcher durch den Verbrennungskraftmotor 2 angetrieben werden kann. Fig. 2 zeigt die einzelnen Komponenten des kombinierten Kühl- und Löschsystems 3. So weist das kombinierte Kühl- und Löschsystem 3 ein Kühlsystem in Form einer Klimaanlage 4 auf und umfasst weiterhin ein Löschsystem 5.

Die Klimaanlage 4 umfasst einen Kompressor 6, ein Expansionsventil 7, einen Verdampfer 8 und einen Kondensator 9. Der Kondensator 6 ist über eine erste Verbindungsleitung 10 mit dem Verdampfer 8 verbunden. Der Verdampfer 8 ist mit einer zweiten Verbindungsleitung 11 mit dem Expansionsventil 7 verbunden. Das Expansionsventil 7 ist über eine dritte Verbindungsleitung 12 mit dem Kondensator 6 verbunden. Der Kondensator 6 ist über eine vierte Verbindungsleitung 13 mit dem Kompressor 6 verbunden. Der Kompressor 6, das Expansionsventil 7, der Verdampfer 8 und der Kondensator 9 sowie die Verbindungsleitungen 10 bis 13 bilden einen Kühlkreislauf, innerhalb welchem Kühlmittel in Form von Kohlenstoffdioxid (CO₂) zirkuliert.

Insbesondere kann das CO₂ durch den Kompressor 6 unter Verbrauch von Antriebsenergie (welche durch den Verbrennungskraftmotor 2 bereitgestellt werden kann) verdichtet werden. In dem nachgeschalteten Kondensator 9 kann das CO₂ kondensieren, wobei es Wärme bei hoher Temperatur insbesondere an eine äußere Umgebung E (Fig. 1) des Kraftfahrzeugs 1 abgeben kann, entsprechend einer bei dem hohen Druck ebenfalls hohen Kondensationstemperatur. Das verflüssigte CO₂ kann anschließend zu dem Expansionsventil 7 geleitet werden, wo der Druck des CO₂ reduziert wird. Innerhalb des Verdampfers 8 kann das CO₂ anschließend durch Verdampfen Wärme bei niedriger Temperatur aufnehmen, insbesondere Wärme eines Innenraums I (Fig. 1) des Kraftfahrzeugs 1. Der Kompressor 6 saugt von dem Verdampfer 8 verdampftes CO₂ wieder an, wodurch ein Kreisprozess geschlossen ist.

Das Löschsystem 5 weist einen Druckbehälter 14, eine erste Düse 15 und eine zweite Düse 16 auf. Innerhalb des Druckbehälters 14 ist verdichtetes CO₂ gespeichert. In dem gezeigten Ausführungsbeispiel ist der Druckbehälter 14 über einen ersten Zweig 17 einer fünften Verbindungsleitung 18 mit der ersten Düse 15 und über einen zweiten Zweig 19 der fünften Verbindungsleitung 18 mit der zweiten Düse 16 verbunden. Die Düsen 15 und 16 sind auf den Verbrennungskraftmotor 2 gerichtet, sodass aus den Düsen 15 und 16 ausströmendes CO₂ zur Bekämpfung eines Feuers im Bereich des Verbrennungskraftmotors 2 genutzt werden kann. Das CO₂ innerhalb des Löschsystems 5 dient somit als Löschmittel.

Der Verbrennungskraftmotor 2 kann einen Riementrieb 20 antreiben. Der Kompressor 6 ist mit dem Riementrieb gekoppelt, sodass der Kompressor 6 über den Riementrieb 20 angetrieben werden kann. Auf diese Weise kann der Verbrennungskraftmotor 2 den Kompressor 6 über den Riementrieb 20 antreiben.

Das kombinierte Kühl- und Löschsystem 3 umfasst ferner ein Steuerungsventil 21. Das Steuerungsventil 21 ist eingangsseitig über eine sechste Verbindungsleitung 22 mit dem Druckbehälter 14 verbunden. Weiterhin ist das Steuerungsventil 21 ausgangsseitig über eine siebte Verbindungsleitung 23 mit der dritten Verbindungsleitung 12 des Kühlsystems 4 zwischen dem Kondensator 9 und dem Expansionsventil 7 verbunden. Alternativ kann das Steuerungsventil 21 ausgangsseitig auch über eine achte Verbindungsleitung 24 mit der ersten Verbindungsleitung 10 zwischen dem Kompressor 6 und dem Verdampfer 8 verbunden sein.

Das Steuerungsventil 21 ist dazu eingerichtet, über die sechste Verbindungsleitung 22 und die siebte Verbindungsleitung 23 CO₂ aus dem Druckbehälter 14 der dritten Verbindungsleitung 12 des Kühlsystems 4 zuzuführen. Auf diese Weise kann dem Kühlsystem 4 zusätzliches CO₂ in einem Bereich vor dem Expansionsventil 7 zugeführt werden. Alternativ kann das Steuerungsventil 21 dazu eingerichtet sein, über die sechste Verbindungsleitung 22 und die achte Verbindungsleitung 24 CO₂ aus dem Druckbehälter 14 der ersten Verbindungsleitung 10 zuzuführen. Auf diese Weise kann dem Kühlsystem 4 zusätzliches CO₂ in einem Bereich vor dem Kompressor 6 zugeführt werden.

Durch diese zusätzliche Menge CO₂ innerhalb des Kühlsystems 4 kann die Kapazität des Kühlmittelsystems 4, insbesondere die Wärmekapazität des Kühlmittels, welches innerhalb des Kühlsystems 4 zirkuliert, erhöht werden. Dadurch kann eine Latenzkälte, welche innerhalb des Kühlsystems vorhanden ist, für einen längeren Zeitraum gehalten werden, wenn der Kompressor 6 nicht mehr betrieben wird. Dies ist insbesondere dann der Fall, wenn der Verbrennungsmotor 2 abgeschaltet ist, z.B. durch eine automatische Motor-Stopp-Funktion des Kraftfahrzeugs 1, welche den Verbrennungsmotor 2 beispielsweise bei längeren Standzeiten des Kraftfahrzeugs 1 oder bei einer Umschaltung auf eine alternative Antriebsvorrichtung, insbesondere einen Elektromotor, automatisch abstellt. In diesem Fall treibt der Verbrennungsmotor 2 nicht länger den Riementrieb 20 an, an welchen der Kompressor 6 typischerweise fest gekoppelt ist. Wenn der Kompressor 6 nicht länger angetrieben wird, fehlt ihm die notwendige Antriebsenergie um CO₂ zu verdichten und zu fördern. Somit wird eine Verdichtung und Förderung von CO₂ gestoppt. Das Kühlsystem 4 kommt somit "zum Stehen". Die zusätzliche Menge an CO₂, welche dem Kühlsystem 4 zugeführt worden ist, sorgt bei stillstehendem Kühlsystem 4 dafür, dass die Latenzkälte innerhalb des Kühlsystems 4 später verbraucht wird, und im Endeffekt das Kühlsystem 4 auch im Stillstand für einen längeren Zeitraum Wärme von Luft insbesondere aus dem Innenraum I des Kraftfahrzeugs 1 aufnehmen und auf diese Weise den Innenraum I länger kühlen kann. Zudem kann durch die erhöhte Menge an CO₂ im Kühlsystem 4 eine Leckage von CO₂ ausgeglichen werden.

Das Steuerungsventil 21 kann weiterhin dazu eingerichtet sein, den Druckbehälter 14 von der dritten Verbindungsleitung 12 bzw. der ersten Verbindungsleitung 10 des Kühlsystems 4 abzukoppeln, wenn das Kühlsystem 4 gestartet wird. Unter "gestartet" kann insbesondere verstanden werden, dass der Kompressor 6 (wieder) über den Riementrieb 20 von dem Verbrennungsmotor 2 angetrieben wird. Das Abkoppeln kann weiterhin auch dann erfolgen, wenn das Löschsystem 5 CO₂ zum Bekämpfen eines Feuers im Bereich des Verbrennungskraftmotors 2 benötigt.

Das Abkoppeln des Druckbehälters 14 von der dritten Verbindungsleitung 12 bzw. der ersten Verbindungsleitung 10 des Kühlsystems 4 erfolgt, indem das Steuerungsventil 21 sich in eine geschlossene Stellung bewegt bzw. in die geschlossene Stellung bewegt wird, in welcher die sechste Verbindungsleitung 22 und die siebte Verbindungsleitung 23 bzw. die achte Verbindungsleitung 24 nicht miteinander verbunden sind. Auf diese Weise wird dem Kühlsystem 4 keine zusätzliche Menge CO₂ aus dem Druckbehälter 14 zugeführt. Umgekehrt wird auch dem Druckbehälter 14 kein CO₂ aus dem Kühlsystem 4 zugeführt. Mit anderen Worten befindet sich das Steuerungsventil 21 in einer beidseitig geschlossenen Stellung. Durch die vorstehend beschriebene Abkopplung kann erreicht werden, dass insbesondere während einer Startphase des Kühlsystems 4, in welcher eine vorgesehene Temperatur beispielsweise des Innenraums I des Kraftfahrzeugs 1 noch nicht eingestellt ist, eine optimale Menge CO₂ insbesondere zum Expansionsventil 7 geleitet wird, wodurch eine besonders hohe thermische Leistung des Kühlsystems 4 ermöglicht wird.

Wenn das Kühlsystem 4 eine vorgesehene Temperatur insbesondere innerhalb des Innenraums I des Kraftfahrzeugs eingeregelt hat, befindet sich das Kühlsystem 4 in einem eingeschwungenem Zustand. In diesem eingeschwungenem Zustand ist es vorteilhaft, den Druckbehälter 14 mit CO₂ aus dem Kühlsystem 4 zu befüllen, um einen Druckaufbau innerhalb des Druckbehälters 14 zu erzeugen. Das dem Druckbehälter 14 zugeführte CO₂ steht dem Löschsystem 5 dann insbesondere zum Löschen eines möglichen Brandes zur Verfügung. Weiterhin kann das in dem Druckbehälter 14 vorbehaltene CO₂ dazu benutzt werden, dem Kühlsystem 4 wieder zugeführt zu werden, wenn der Verbrennungskraftmotor 2 gestoppt wird und folglich der Verbrennungskraftmotor 2 den Kompressor 6 nicht länger über den Riementrieb 20 antreibt.

Zu diesem Zweck kann das Steuerungsventil 21 dazu eingerichtet sein, CO₂ aus der dritten Verbindungsleitung 12 des Kühlsystems 4 dem Druckbehälter 14 zuzuführen, und zwar über die siebte Verbindungsleitung 23, das Steuerungsventil 21 und die sechste Verbindungsleitung 22. Auf diese Weise kann dem Kühlsystem 4 CO₂ aus einem Bereich vor dem Expansionsventil 7 entzogen und dem Druckbehälter 14 des Löschsystems 5 zugeführt werden. Auf ähnliche Weise kann das Steuerungsventil 21 dazu eingerichtet sein, CO₂ aus der ersten Verbindungsleitung 10 des Kühlsystems 4 dem Druckbehälter 14 zuzuführen, und zwar über die achte Verbindungsleitung 24, das Steuerungsventil 21 und die sechste Verbindungsleitung 22. Auf diese Weise kann dem Kühlsystem 4 CO₂ aus einem Bereich vor dem Kompressor 6 entzogen und dem Druckbehälter 14 des Löschsystems 5 zugeführt werden.

## Patentansprüche

1. Kombiniertes Kühl- und Löschsystem (3) für ein Kraftfahrzeug (1), umfassend:
- ein Kühlsystem (4), innerhalb welchem Kohlenstoffdioxid (CO₂) als Kühlmittel zirkuliert, wobei das Kühlsystem (4) einen Kompressor (6), einen Verdampfer (8), ein Expansionsventil (7) und einen Kondensator (9) aufweist,
- ein Löschsystem (5) mit einem Druckbehälter (14), innerhalb welchem verdichtetes CO₂ gespeichert ist,
- ein Steuerungsventil (21),
wobei das Steuerungsventil (21)
- mit dem Druckbehälter (14) des Löschsystems (5) und mit dem Kühlsystem (4) verbunden ist, und
- dazu eingerichtet ist, CO₂ aus dem Druckbehälter (14) dem Kühlsystem (4) zuzuführen **dadurch gekennzeichnet dass**
das Steuerungsventil dazu eingerichtet ist, CO₂ aus dem Kühlsystem (4) dem Druckbehälter (14) zuzuführen.

2. Kombiniertes Kühl- und Löschsystem (3) nach Anspruch 1, wobei das Steuerungsventil (21) dazu eingerichtet ist, sich in eine in Richtung des Kühlsystems (4) geöffnete Stellung zu begeben, wenn der Kompressor (6) des Kühlsystems (4) nicht angetrieben wird.

3. Kombiniertes Kühl- und Löschsystem (3) nach Anspruch 1 oder 2, wobei das Steuerungsventil (21) dazu eingerichtet ist, sich in eine geschlossene Stellung zu begeben, sofern der Kompressor (6) angetrieben wird.

4. Kombiniertes Kühl- und Löschsystem (3) nach einem der vorstehenden Ansprüche, wobei das Steuerungsventil (21) dazu eingerichtet ist, sich in eine geschlossene Stellung zu bewegen, sofern das Löschsystem (5) CO₂ zur Bekämpfung eines Feuers abgibt.

5. Kombiniertes Kühl- und Löschsystem (3) nach einem der vorstehenden Ansprüche, wobei das Steuerungsventil (21) dazu eingerichtet ist, sich in eine in Richtung des Druckbehälters (14) geöffnete Stellung zu bewegen, sofern sich das Kühlsystem (4) in einem eingeschwungenem Zustand befindet.

6. Kombiniertes Kühl- und Löschsystem (3) nach einem der vorstehenden Ansprüche, wobei das Steuerungsventil (21) ein Solenoidventil ist.

7. Fahrzeug (1) umfassend ein kombiniertes Kühl- und Löschsystem (3) nach einem der vorstehenden Ansprüche.

8. Fahrzeug (1) nach Anspruch 7, weiterhin umfassend einen Verbrennungskraftmotor (2) und einen Riementrieb (20), wobei der Verbrennungskraftmotor (2) dazu eingerichtet ist, den Riementrieb (20) anzutreiben und der Kompressor (6) des Kühlsystems (4) derart mit dem Riementrieb (20) gekoppelt ist, dass der Riementrieb (20) den Kompressor (6) antreiben kann.

## Claims

1. Combined cooling and extinguishing system (3) for a motor vehicle (1), comprising:
- a cooling system (4) within which carbon dioxide (CO₂) circulates as coolant, wherein the cooling system (4) has a compressor (6), an evaporator (8), an expansion valve (7) and a condenser (9),
- an extinguishing system (5) having a pressure vessel (14) within which compressed CO₂ is stored,
- a control valve (21),
wherein the control valve (21)
- is connected to the pressure vessel (14) of the extinguishing system (5) and to the cooling system (4), and
- is designed to supply CO₂ from the pressure vessel (14) to the cooling system (4), **characterized in that** the control valve is designed to supply CO₂ from the cooling system (4) to the pressure vessel (14).

2. Combined cooling and extinguishing system (3) according to Claim 1, wherein the control valve (21) is designed to move into a position in which it is open in the direction of the cooling system (4) if the compressor (6) of the cooling system (4) is not driven.

3. Combined cooling and extinguishing system (3) according to Claim 1 or 2, wherein the control valve (21) is designed to move into a closed position if the compressor (6) is driven.

4. Combined cooling and extinguishing system (3) according to one of the preceding claims, wherein the control valve (21) is designed to move into a closed position if the extinguishing system (5) releases CO₂ for fighting a fire.

5. Combined cooling and extinguishing system (3) according to one of the preceding claims, wherein the control valve (21) is designed to move into a position in which it is open in the direction of the pressure vessel (14) if the cooling system (4) is situated in a steady state.

6. Combined cooling and extinguishing system (3) according to one of the preceding claims, wherein the control valve (21) is a solenoid valve.

7. Vehicle (1) comprising a combined cooling and extinguishing system (3) according to one of the preceding claims.

8. Vehicle (1) according to Claim 7, further comprising an internal combustion engine (2) and a belt drive (20), wherein the internal combustion engine (2) is designed to drive the belt drive (20), and the compressor (6) of the cooling system (4) is coupled to the belt drive (20) in such a way that the belt drive (20) can drive the compressor (6).

## Revendications

1. Système combiné de refroidissement et d'extinction (3) pour un véhicule automobile (1), comprenant :
- un système de refroidissement (4), à l'intérieur duquel circule du dioxyde de carbone (CO₂) en tant que fluide de refroidissement, le système de refroidissement (4) présentant un compresseur (6), un évaporateur (8), une soupape d'expansion (7) et un condenseur (9),
- un système d'extinction (5) avec un réservoir sous pression (14) à l'intérieur duquel est stocké du CO₂ sous pression,
- une soupape de commande (21),
la soupape de commande (21)
- étant connectée au réservoir sous pression (14) du système d'extinction (5) et au système de refroidissement (4), et
- étant prévue pour acheminer du CO₂ du réservoir sous pression (14) au système de refroidissement (4),
**caractérisé en ce que** la soupape de commande est prévue pour acheminer du CO₂ du système de refroidissement (4) au réservoir sous pression (14).

2. Système combiné de refroidissement et d'extinction (3) selon la revendication 1, dans lequel la soupape de commande (21) est prévue pour se déplacer dans une position ouverte dans la direction du système de refroidissement (4) lorsque le compresseur (6) du système de refroidissement (4) n'est pas entraîné.

3. Système combiné de refroidissement et d'extinction (3) selon la revendication 1 ou 2, dans lequel la soupape de commande (21) est prévue pour se déplacer dans une position fermée si le compresseur (6) est entraîné.

4. Système combiné de refroidissement et d'extinction (3) selon l'une quelconque des revendications précédentes, dans lequel la soupape de commande (21) est prévue pour se déplacer dans une position fermée si le système d'extinction (5) libère du CO₂ pour lutter contre un incendie.

5. Système combiné de refroidissement et d'extinction (3) selon l'une quelconque des revendications précédentes, dans lequel la soupape de commande (21) est prévue pour se déplacer dans une position ouverte dans la direction du réservoir sous pression (14) si le système de refroidissement (4) se trouve dans un état stable.

6. Système combiné de refroidissement et d'extinction (3) selon l'une quelconque des revendications précédentes, dans lequel la soupape de commande (21) est une électrovanne.

7. Véhicule (1) comprenant un système combiné de refroidissement et d'extinction (3) selon l'une quelconque des revendications précédentes.

8. Véhicule (1) selon la revendication 7, comprenant en outre un moteur à combustion interne (2) et un entraînement à courroie (20), le moteur à combustion interne (2) étant prévu pour entraîner l'entraînement à courroie (20) et le compresseur (6) du système de refroidissement (4) étant accouplé à l'entraînement à courroie (20) de telle sorte que l'entraînement à courroie (20) puisse entraîner le compresseur (6) .
